# EUROPÄISCHE PATENTSCHRIFT

(11) **EP 4 302 022 B1**
(45) Veröffentlichungstag und Bekanntmachung des Hinweises auf die Patenterteilung: **13.08.2025**
(21) Anmeldenummer: 22700218.5
(22) Anmeldetag: 03.01.2022
(51) Int. Cl.: F24H 1/16, F24H 3/06, F24H 6/00, F28D 7/02, F28D 7/10, F28F 1/16, B60H 1/22

(54) **VORRICHTUNG ZUM ERWÄRMEN EINES MEDIUMS UND VON LUFT**
DEVICE FOR HEATING A MEDIUM AND AIR
DISPOSITIF DE CHAUFFAGE DE FLUIDE ET D'AIR

(30) Priorität: 01.03.2021 DE 102021001082
(43) Veröffentlichungstag der Anmeldung: 10.01.2024
(73) Patentinhaber: Truma Gerätetechnik GmbH & Co. KG, 85640 Putzbrunn (DE)
(72) Erfinder: HARTMANN, Thomas, 85640 Putzbrunn (DE); STAHL, Bernhard, 85640 Putzbrunn (DE)
(74) Vertreter: Prinz & Partner mbB
(86) Internationale Anmeldenummer: PCT/EP2022/000003
(87) Internationale Veröffentlichungsnummer: WO 2022/184314

(56) Entgegenhaltungen:
- WO-A1-2020/110085
- DE-A1- 102011 085 076
- DE-A1- 4 036 147
- DE-U1- 29 722 802
- DE-U1- 9 002 588

## Beschreibung

Die Erfindung bezieht sich auf eine Vorrichtung zum Erwärmen mindestens eines Mediums und von Luft. Bei dem Medium handelt es sich beispielsweise um Wasser.

In der DE 41 16 692 A1 wird ein Luftheizgerät beschrieben, in welchem ein Wärmetauschereinsatz thermische Energie von Verbrennungsgasen auf Raumluft überträgt. Alternativ ist angedeutet, dass der Wärmetauschereinsatz von einem Wasserringbehälter umgeben ist, sodass Wasser erwärmt werden kann. In der DE 10 2018 006 595 A1 wird ein Wärmetauscher beschrieben, in welchen elektrische Heizelemente als sekundäre Heizquelle einbringbar sind. Ein Wärmetauscher mit Außenrippen, der elektrische Heizelemente aufweist und der Erwärmung von Luft dient, ist beschrieben in der EP 2 462 385 B1. Eine Vorrichtung zum Erwärmen von Luft und Wasser zeigt die WO 2020/100085 A1. Dabei befinden sich ein elektrisches Heizelement und eine Wasserleitung im Inneren eines Wärmetauschers, der von Luft überströmt wird. Konzentrische Führungen von Heizelementen und Wasserleitungen offenbaren die KR 100575278 B1 oder die US 2004/0154312 A1.

Aus der DE 297 22 802 U1 ist ein Heizgerät zum Erwärmen von Luft und/oder Wasser für Caravans, Wohnmobile, Boote oder bekannt. Es wird ein Brenner verwendet, der einen eine Brennkammer umgebenden Heizraum aufweist, wobei der Heizraum von einem Wärmeübertragereinsatz umschlossen wird. Der Wärmeübertragereinsatz wird wiederum von einem Wasserkessel umschlossen. Der Wasserkessel weist auf seiner Innenseite Bereiche unterschiedlich definierter Spaltgeometrie auf, die den Wärmeübergang vom Wärmeübertragereinsatz zum Wasserkessel bestimmen.

Aus der DE 10 2011 085 076 A1 ist ein Heizgerät für ein Fahrzeug bekannt, das einen Wärmetauscher mit einem von zu erwärmendem ersten Wärmeträgermedium durchströmbaren Erwärmungsvolumen in einem Wärmetauschergehäuse und eine elektrisch erregbare Heizeinheit mit wenigstens einem in dem Erwärmungsvolumen in Heizwechselwirkung mit dem ersten Wärmeträgermedium bringbaren Heizorgan aufweist. Dabei ist eine Brennerbereich-Schnittstelle zur Anbindung eines mit Brennstoff und Verbrennungsluft zu speisenden Brennerbereichs an die Wärmetauscheranordnung zusätzlich zur elektrisch erregbaren Heizeinheit vorgesehen.

Nachteilig am Stand der Technik ist, dass es sich meist um sehr komplexe und aus vielerlei Komponenten bestehende Geräte handelt, die insbesondere in der Fertigung sehr aufwendig sind.

Die der Erfindung zugrundeliegende Aufgabe besteht darin, eine Vorrichtung zum Erwärmen eines Mediums und von Luft vorzuschlagen, das vorteilhaft gegenüber dem Stand der Technik ist.

Die Erfindung löst die Aufgabe durch eine Vorrichtung mit den Merkmalen des ersten Anspruchs.

Die Vorrichtung erlaubt das Erwärmen eines Mediums und von Luft. Dabei ist es möglich, dass entweder nur Medium oder nur Luft allein oder dass Medium und Luft gemeinsam erwärmt werden. Durch das elektrische Heizelement wird beispielsweise nur das Medium erwärmt, auch wenn die Heizquelle nicht arbeitet. Wird umgekehrt kein Medium durch das Mediumsrohr geleitet, so fungiert die Vorrichtung als reine Luftheizung. Die Vorrichtung verfügt über eine Heizquelle und mindestens ein elektrisches Heizelement, welche beide thermische Energie erzeugen, die der Erwärmung des Mediums dient. Die durch das Verbrennen eines Brennstoff-Luft-Gemischs erzeugte thermische Energie der Heizquelle wird dem mindestens einen Mediumsrohr und damit dem in dem Mediumsrohr geführten Medium mittelbar über den Wärmetauscher zugeführt. Der Wärmetauscher erwärmt zudem Luft, welche an einer Außenseite entlanggeführt ist. Der Wärmetauscher weist einen Innenraum auf, in welchen bei der Verbrennung des Brennstoff-Luft-Gemischs entstehendes Rauchgas gelangt. Der Wärmetauscher verfügt auf der Außenseite über eine Rippenstruktur. Das elektrische Heizelement ist vorzugsweise unmittelbar thermisch mit dem Mediumsrohr gekoppelt. Der Wärmetauscher ist derartig ausgeführt, dass in ihm sowohl das elektrische Heizelement als auch das Mediumsrohr zumindest teilweise geführt sind. Der Wärmetauscher nimmt somit das elektrische Heizelement und das Mediumsrohr zumindest teilweise auf. Für diesen Zweck verfügt der Wärmetauscher über integrale Strukturen, durch welche der Wärmetauscher auch als Träger von elektrischem Heizelement und Mediumsrohr fungiert. Durch die integralen Strukturen sind keine zusätzlichen Befestigungs- oder Fixierungskomponenten erforderlich. Weiterhin kann für die Fertigung aus dem Wärmetauscher, dem elektrischen Heizelement und dem Mediumsrohr bereits eine gemeinsame Komponente erzeugt werden. Indem das Mediumsrohr - vorzugsweise konzentrisch - um den Innenraum des Wärmetauschers geführt ist, ist es in dem Wärmetauscher um den Innenraum herumgewickelt und weist vorzugsweise auch entlang einer Längsachse des Wärmetauschers eine axiale Erstreckung auf. Indem das elektrische Heizelement - vorzugsweise konzentrisch - um den Innenraum des Wärmetauschers geführt ist, ist es in der Art einer Heizwendel ausgestaltet, die sich um den Innenraum des Wärmetauschers herum befindet und vorzugweise entlang einer Längsachse des Wärmetauschers erstreckt.

In einer Ausgestaltung nimmt der Wärmetauscher das elektrische Heizelement und das Mediumsrohr vollständig und bis auf Anschlusskomponenten oder Anschlussabschnitte auf.

Die Heizquelle verfügt in einer Ausgestaltung zumindest über einen Brenner, in welchem ein Gas-Luft-Gemisch oder ein Diesel-Luft-Gemisch als Beispiele für ein Brennstoff-Luft-Gemisch verbrannt wird. Das dabei entstehende Rauchgas wird in den Innenraum des Wärmetauschers eingebracht.

In einer Ausgestaltung ist das elektrische Heizelement in dem Wärmetauscher eingegossen.

In einer Ausgestaltung sind das Mediumsrohr und das elektrische Heizelement konzentrisch um den Innenraum des Wärmetauschers herumgeführt und zusätzlich erstrecken sich das Mediumsrohr und das elektrische Heizelement auch axial entlang einer Längsachse des Wärmetauschers. In einer Ausgestaltung ist die axiale Erstreckung mindestens gleich der Höhe des Innenraums des Wärmetauschers.

Gemäß einer Ausgestaltung sind das Mediumsrohr und das elektrische Heizelement parallel zueinander geführt. In einer Ausgestaltung liegen das Mediumsrohr und das elektrische Heizelement nebeneinander und sind beide um den Innenraum des Wärmetauschers herum und über eine axiale Erstreckung entlang des Innenraums geführt.

Eine Ausgestaltung besteht darin, dass zwischen dem Mediumsrohr und dem elektrischen Heizelement ein möglichst geringer thermischer Widerstand besteht. In einer alternativen oder ergänzenden Ausgestaltung stehen das Mediumsrohr und das elektrische Heizelement im thermischen Kontakt miteinander. In dieser Ausgestaltung erlaubt das elektrische Heizelement die unmittelbare Erwärmung des Mediums in dem Mediumsrohr.

In einer Ausgestaltung sind die integralen Strukturen des Wärmetauschers röhrenförmig ausgeführt. In einer Ausgestaltung sind zwei Röhren vorgesehen, in denen das Mediumsrohr und das elektrische Heizelement jeweils separat geführt und/oder eingegossen sind. In einer alternativen Ausgestaltung ist nur eine Röhre vorgesehen, welche das Mediumsrohr und das elektrische Heizelement gemeinsam aufnimmt.

In einer Ausgestaltung sind das Mediumsrohr und die integrale Struktur für das Mediumsrohr in einer Einheit integriert. Der Wärmetauscher hat somit eine röhrenförmige Struktur, durch welche das Medium geleitet wird.

Gemäß einer Ausgestaltung weist die Vorrichtung zwei elektrische Heizelemente auf und die integralen Strukturen nehmen die zwei elektrischen Heizelemente zumindest teilweise auf. In dieser Ausgestaltung sind zwei elektrische Heizelemente vorhanden, die identisch oder unterschiedlich ausgeführt sein können. In einer Variante handelt es sich um zwei Heizwendeln. Die zwei elektrischen Heizelemente sind dabei jeweils in den Strukturen des Wärmetauschers eingebracht.

Eine Ausgestaltung besteht darin, dass der Wärmetauscher zumindest teilweise aus einem Druckguss oder aus einem Sintermaterial besteht.

Gemäß einer Ausgestaltung ist der Wärmetauscher einteilig oder mehrteilig ausgeführt.

Im Einzelnen gibt es eine Vielzahl von Möglichkeiten, die erfindungsgemäße Vorrichtung auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigt die:
- Fig. 1:: eine schematische Darstellung der Vorrichtung in Bezug auf die Übertragung der thermischen Energie auf das Medium,
- Fig. 2:: eine angeschnittene räumliche Darstellung einer ersten Ausgestaltung eines erfindungsgemäßen Wärmetauschers und
- Fig. 3:: eine angeschnittene räumliche Darstellung einer zweiten Ausgestaltung eines erfindungsgemäßen Wärmetauschers.

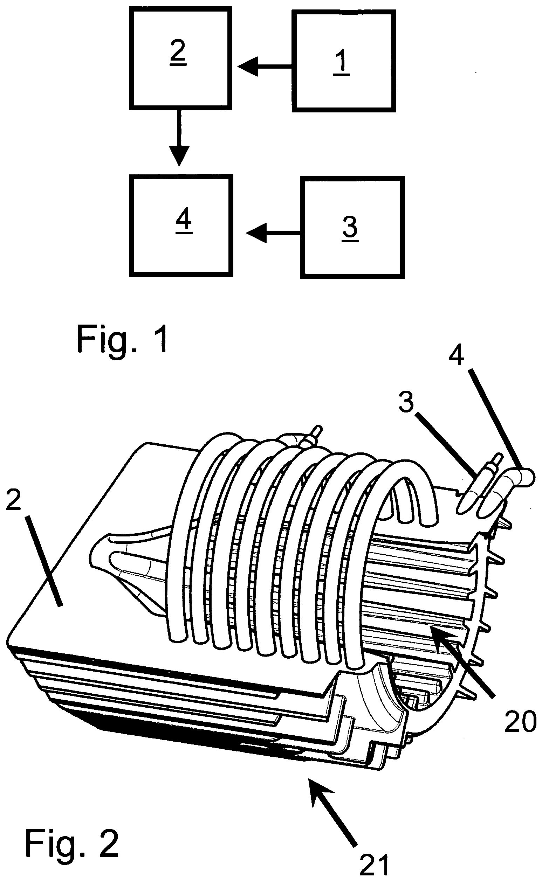

Die Fig. 1 zeigt schematisch eine Vorrichtung zum Erwärmen eines Mediums, bei dem es sich beispielsweise um Wasser handelt, und von Luft.

Die Heizquelle 1 erzeugt - z. B. durch das Verbrennen eines Gas-Luft- oder eines Diesel-Luft-Gemischs in einem Brenner - thermische Energie, die über einen Wärmetauscher 2 auf das zu erwärmende Medium übertragen wird. Das Medium wird dabei in einem Mediumsrohr 4 geführt, wofür in einer Variante eine - hier nicht dargestellte - Pumpe vorhanden ist. Das elektrische Heizelement 4 ist unmittelbar thermisch mit dem Mediumsrohr 4 gekoppelt, um die erzeugte thermische Energie zum Erwärmen des Mediums zu verwenden. Für den elektrischen Erwärmungsvorgang ist vorzugsweise eine - hier ebenfalls nicht dargestellte - Steuer- oder Regeleinheit vorhanden. In dieser Ausgestaltung wird das Medium somit durch einen Verbrennungsprozess und ergänzend oder alternativ durch elektrische Energie erwärmt. Dient die Vorrichtung als Luftheizung, so wird Luft an dem Wärmetauscher 2 entlanggeführt. Die thermische Energie stammt dabei entweder von der Heizquelle 1 oder von dem elektrischen Heizelement 3. Die thermische Energie kann auch von der Heizquelle 1 und dem elektrischen Heizelement 3 stammen. Das elektrische Heizelement 3 übertragt dabei seine thermische Energie auf den Wärmetauscher 2, der wiederum die vorbeigeführte Luft erwärmt. Schließlich können auch Luft und das Medium gleichzeitig erwärmt werden.

Die Fig. 2 zeigt eine teilweise angeschnittene räumliche Darstellung einer ersten Ausgestaltung eines erfindungsgemäßen Wärmetauschers 2. Der Wärmetauscher 2 verfügt über einen Innenraum 20, in welchen beispielsweise das Rauchgas der - in der Fig. 1 angedeuteten - Heizquelle eingebracht wird. Diese thermische Energie im Innenraum 20 überträgt der Wärmetauscher 2 nach außen, sodass auch Luft, die an der Außenseite des Wärmetauchers 2 entlanggeführt wird, erwärmt werden kann. Hierfür ist beispielweise ein - nicht dargestelltes - Gebläse vorhanden. Der Übertragung der thermischen Energie auf die Luft dient dabei auch die hier vorgesehene Rippenstruktur 21 auf der Außenseite des Wärmetauschers 2. Das Mediumsrohr 4 ist hier konzentrisch und entlang einer axialen Erstreckung um den Innenraum 20 herumgeführt. Das Mediumsrohr 4 windet sich somit um den Innenraum 20 herum und wird dabei auch axial entlang des Innenraums 20 geführt. Parallel zum Mediumsrohr 4 verläuft das elektrische Heizelement 3. Hierdurch soll ein möglichst geringer thermischer Widerstand erzeugt werden. Das elektrische Heizelement 3 und das Mediumsrohr 4 sind an ihren unterschiedlichen Anschlusstypen gut voneinander zu unterscheiden.

In dieser Ausgestaltung verfügt der Wärmetauscher 2 über zwei separate Rohre als Struktur zur Führung von Mediumsrohr 4 und elektrischem Heizelement 3, die jeweils nebeneinander liegen und sich in der Reihenfolge abwechseln. Die Strukturen dienen als Halt der Komponenten 3, 4 und erzeugen auch eine kompakte Fertigungskomponente, die die Fertigung der Vorrichtung vereinfacht. Deutlich ist vor allem zu erkennen, dass sich die Struktur in der Wandung des Wärmetauschers 2 befindet und somit das elektrische Heizelement 3 und das Mediumsrohr 4 im Wärmetauscher 2 eingebettet sind.

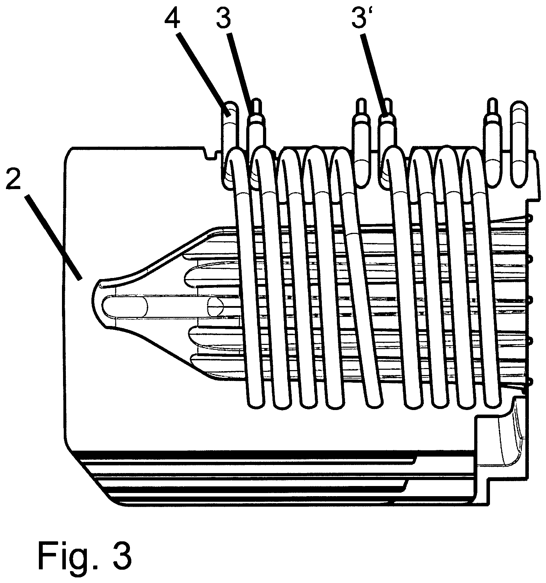

In der zweiten Ausgestaltung des Wärmetauschers 2 in der Fig. 3 sind zwei elektrische Heizelemente 3, 3' vorgesehen, die hintereinander angeordnet sind. Dies ist daran zu erkennen, dass entlang der Längserstreckung des Wärmetauschers 2 für beide Heizelemente 3, 3' passende Anschlusskontakte nebeneinander angeordnet sind. Das Mediumsrohr 4 hat jeweils in Richtung des beiden Endflächen des Wärmetauschers 2 seine aus dem Wärmetauscher 2 herausgeführten Endabschnitte. In dieser Ausführung sind somit weitere Zugangsbereiche (oder Öffnungen) in dem Wärmetauscher 2 vorzusehen.

## Patentansprüche

1. Vorrichtung zum Erwärmen eines Mediums und von Luft,
mit einer Heizquelle (1) und einem Wärmetauscher (2),
wobei die Heizquelle (1) dazu eingerichtet ist, durch das Verbrennen eines Brennstoff-Luft-Gemischs thermische Energie zu erzeugen,
wobei der Wärmetauscher (2) dazu eingerichtet ist, der Erwärmung von an einer Außenseite entlanggeführter Luft zu dienen,
wobei der Wärmetauscher (2) einen Innenraum (20) aufweist, der dazu eingerichtet ist, dass in ihn bei der Verbrennung des Brennstoff-Luft-Gemischs entstehendes Rauchgas gelangt,
wobei der Wärmetauscher (2) auf der Außenseite über eine Rippenstruktur (21) verfügt,
**dadurch gekennzeichnet, dass**
mindestens ein elektrisches Heizelement (3) und mindestens ein Mediumsrohr (4) vorgesehen sind,
der Wärmetauscher (2) dazu eingerichtet ist, die von der Heizquelle (1) erzeugte thermische Energie auf das Mediumsrohr (4) zu übertragen, und dass das elektrische Heizelement (3) dazu eingerichtet ist, thermische Energie zu erzeugen,
wobei der Wärmetauscher (2) integrale Strukturen zur wenigstens teilweisen Aufnahme sowohl des elektrischen Heizelements (3) als auch des Mediumsrohrs (4) aufweist,
wobei das Mediumsrohr (4) - vorzugsweise konzentrisch - um den Innenraum (20) des Wärmetauschers (2) geführt ist, und
wobei das elektrische Heizelement (3) - vorzugsweise konzentrisch - um den Innenraum (20) des Wärmetauschers (2) geführt ist.

2. Vorrichtung nach Anspruch 1,
wobei das Mediumsrohr (4) und das elektrische Heizelement (3) parallel zueinander geführt sind.

3. Vorrichtung nach Anspruch 1 oder 2,
wobei das Mediumsrohr (4) und das elektrische Heizelement (3) im thermischen Kontakt miteinander stehen.

4. Vorrichtung nach einem der Ansprüche 1 bis 3,
wobei die integralen Strukturen des Wärmetauschers (2) röhrenförmig ausgeführt sind.

5. Vorrichtung nach einem der Ansprüche 1 bis 4,
wobei die Vorrichtung zwei elektrische Heizelemente (3, 3') aufweist, und
wobei die integralen Strukturen die zwei elektrischen Heizelemente (3, 3') zumindest teilweise aufnehmen.

6. Vorrichtung nach einem der Ansprüche 1 bis 5,
wobei der Wärmetauscher (2) zumindest teilweise aus einem Druckguss oder aus einem Sintermaterial besteht.

## Claims

1. A device for heating a medium and air,
comprising a heating source (1) and a heat exchanger (2),
the heating source (1) being configured to generate thermal energy by the combustion of a fuel-air mixture,
the heat exchanger (2) being configured to serve to heat air passed along an exterior side,
the heat exchanger (2) having an interior space (20) configured such that flue gas generated during combustion of the fuel-air mixture enters into it,
the heat exchanger (2) having a fin structure (21) on the exterior side,
**characterized in that**
at least one electric heating element (3) and at least one medium pipe (4) are provided,
the heat exchanger (2) is configured to transmit the thermal energy generated by the heating source (1) to the medium pipe (4), and
the electric heating element (3) is configured to generate thermal energy,
the heat exchanger (2) having integral structures for at least partially accommodating both the electric heating element (3) and the medium pipe (4),
the medium pipe (4) being guided - preferably concentrically - around the interior space (20) of the heat exchanger (2), and
the electric heating element (3) being guided - preferably concentrically - around the interior space (20) of the heat exchanger (2).

2. The device according to claim 1,
the medium pipe (4) and the electric heating element (3) being guided parallel to each other.

3. The device according to claim 1 or 2,
the medium pipe (4) and the electric heating element (3) being in thermal contact with each other.

4. The device according to any of claims 1 to 3,
the integral structures of the heat exchanger (2) being configured in a tubular shape.

5. The device according to any of claims 1 to 4,
the device having two electric heating elements (3, 3'), and
the integral structures at least partially accommodating the two electric heating elements (3, 3').

6. The device according to any of claims 1 to 5,
the heat exchanger (2) being at least partially made of a die-cast or of a sintered material.

## Revendications

1. Dispositif pour chauffer un milieu et de l'air,
comprenant une source de chaleur (1) et un échangeur de chaleur (2),
la source de chaleur (1) étant aménagée de manière à produire de l'énergie thermique par la combustion d'un mélange combustible-air,
l'échangeur de chaleur (2) étant aménagé de manière à servir au chauffage d'air guidé le long d'une face extérieure,
l'échangeur de chaleur (2) présentant un espace intérieur (20) qui est aménagé de sorte que des gaz de combustion produits lors de la combustion du mélange combustible-air pénètrent dans celui-ci,
l'échangeur de chaleur (2) présentant sur la face extérieure une structure nervurée (21),
**caractérisé en ce que**
il est prévu au moins un élément chauffant électrique (3) et au moins un tube de milieu (4),
l'échangeur de chaleur (2) est aménagé de manière à transférer l'énergie thermique produite par la source de chaleur (1) au tube de milieu (4), et
**en ce que** l'élément chauffant électrique (3) est aménagé de manière à produire de l'énergie thermique,
l'échangeur de chaleur (2) présentant des structures intégrales pour la réception au moins partielle de l'élément chauffant électrique (3) et du tube de milieu (4),
le tube de milieu (4) étant guidé - de préférence de manière concentrique - autour de l'espace intérieur (20) de l'échangeur de chaleur (2), et
l'élément chauffant électrique (3) étant guidé - de préférence de manière concentrique - autour de l'espace intérieur (20) de l'échangeur de chaleur (2).

2. Dispositif selon la revendication 1,
le tube de milieu (4) et l'élément chauffant électrique (3) étant guidés parallèlement l'un à l'autre.

3. Dispositif selon la revendication 1 ou 2,
le tube de milieu (4) et l'élément chauffant électrique (3) étant en contact thermique l'un avec l'autre.

4. Dispositif selon l'une des revendications 1 à 3,
les structures intégrales de l'échangeur de chaleur (2) étant réalisées sous forme tubulaire.

5. Dispositif selon l'une des revendications 1 à 4,
le dispositif comportant deux éléments chauffants électriques (3, 3'), et
les structures intégrales recevant au moins partiellement les deux éléments chauffants électriques (3, 3').

6. Dispositif selon l'une des revendications 1 à 5,
l'échangeur de chaleur (2) étant constitué au moins en partie d'un coulage sous pression ou d'un matériau fritté.
